(19) Europäisches Patentamt
European Patent Office
Office européen des brevets

(11) EP 4 468 388 A1

(12) # EUROPEAN PATENT APPLICATION
published in accordance with Art. 153(4) EPC

(43) Date of publication:
**27.11.2024 Bulletin 2024/48**

(21) Application number: **23740224.3**

(22) Date of filing: **06.01.2023**

(51) International Patent Classification (IPC):
***H01M 4/13*** (2010.01) ***H01G 11/30*** (2013.01)
***H01G 11/36*** (2013.01) ***H01G 11/38*** (2013.01)
***H01M 4/139*** (2010.01) ***H01M 4/38*** (2006.01)
***H01M 4/48*** (2010.01) ***H01M 4/587*** (2010.01)
***H01M 4/62*** (2006.01)

(52) Cooperative Patent Classification (CPC):
**H01G 11/30; H01G 11/36; H01G 11/38; H01M 4/13; H01M 4/139; H01M 4/36; H01M 4/38; H01M 4/48; H01M 4/485; H01M 4/587; H01M 4/62;** Y02E 60/10

(86) International application number:
**PCT/JP2023/000174**

(87) International publication number:
**WO 2023/136215 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.01.2022 JP 2022005324**

(71) Applicants:
- **DAIKIN INDUSTRIES, LTD.**
  **Osaka-shi, Osaka 530-0001 (JP)**
- **MCD Technologies S.a.r.l**
  **3364 Leudelange (LU)**

(72) Inventors:
- **SHIMOOKA, Toshiharu**
  **Osaka-Shi, Osaka 530-0001 (JP)**
- **HOSODA, Chihiro**
  **Osaka-Shi, Osaka 530-0001 (JP)**
- **ICHINOSE, Yuma**
  **Osaka-Shi, Osaka 530-0001 (JP)**
- **YAMAZAKI, Shigeaki**
  **Osaka-Shi, Osaka 530-0001 (JP)**
- **TERADA, Junpei**
  **Osaka-Shi, Osaka 530-0001 (JP)**
- **SUGITANI, Maho**
  **Osaka-Shi, Osaka 530-0001 (JP)**
- **PREDTECHENSKIY, Mikhail Rudolfovich**
  **Novosibirsk 630090 (RU)**
- **BOBRENOK, Oleg Filippovich**
  **Novosibirsk 630090 (RU)**

(74) Representative: **Hoffmann Eitle**
**Patent- und Rechtsanwälte PartmbB**
**Arabellastraße 30**
**81925 München (DE)**

(54) **NEGATIVE-ELECTRODE MIX, NEGATIVE ELECTRODE, AND SECONDARY BATTERY**

(57) Provided is a negative electrode mixture containing a single-walled carbon nanotube, a negative electrode active material, and a binder, in which the negative electrode mixture contains, as the negative electrode active material, a negative electrode active material that exhibits a potential of 2.5 V or less vs. Li when alloyed with Li or bonded with Li, and the binder contains a fluorine-containing copolymer containing vinylidene fluoride unit and a unit of an other monomer other than vinylidene fluoride.

EP 4 468 388 A1

## Description

TECHNICAL FIELD

The present disclosure relates to a negative electrode mixture, a negative electrode, and a secondary battery.

BACKGROUND ART

Patent Document 1 describes a secondary battery including an electrolytic solution together with a positive electrode and a negative electrode, in which the negative electrode contains a first negative electrode active material, a second negative electrode active material, and a negative electrode binder, the first negative electrode active material includes a central part containing a material containing silicon (Si) as a constituent element and a coating part that is provided on the surface of the central part and contains a salt compound and a conductive substance, the salt compound contains at least one of a polyacrylate and a carboxymethylcellulose salt, the conductive substance contains at least one of a carbon material and a metal material, the second negative electrode active material contains a material containing carbon (C) as a constituent element, and the negative electrode binder contains at least one of a polyvinylidene fluoride, a polyimide, and an aramid.

RELATED ART

PATENT DOCUMENTS

Patent Document 1: International Publication No. WO 2018-146865

SUMMARY OF THE INVENTION

PROBLEM TO BE SOLVED BY THE INVENTION

An object of the present disclosure is to provide a negative electrode mixture that allows a negative electrode material layer having excellent flexibility and extremely strongly adhering to a metal foil to be formed and allows a battery having excellent cycle characteristics and having a low gas increase rate even after being repeatedly charged and discharged to be obtained.

MEANS FOR SOLVING THE PROBLEM

According to the present disclosure, provided is a negative electrode mixture containing a single-walled carbon nanotube, a negative electrode active material and a binder, wherein the negative electrode mixture contains, as the negative electrode active material, a negative electrode active material that exhibits a potential of 2.5 V or less vs. Li when alloyed with Li or bonded with Li, and the binder contains a fluorine-containing copolymer containing vinylidene fluoride unit and a unit of an other monomer other than vinylidene fluoride.
The negative electrode active material is preferably a compound containing at least one element selected from the group consisting of Si, Sn, V, Nb, and Ti.
The negative electrode active material is preferably at least one selected from the group consisting of Si and $SiO_x$ $(0 < x < 2)$ .
The negative electrode active material is preferably a carbonaceous material.
The negative electrode active material preferably includes a compound containing at least one element selected from the group consisting of Si, Sn, V, Nb, and Ti, and a carbonaceous material.
An average outer diameter of the single-walled carbon nanotube is preferably 2.5 nm or less.
An average G/D ratio of the single-walled carbon nanotube is preferably 2 or more.
A content of the single-walled carbon nanotube is preferably 0.001 to 10% by mass, based on a solid content mass of the negative electrode mixture.
The other monomer is preferably a fluorinated monomer, excluding vinylidene fluoride unit.
The other monomer is preferably at least one selected from the group consisting of tetrafluoroethylene, chlorotrifluoroethylene, (meth)acrylic acid, 2,3,3,3-tetrafluoropropene, hexafluoropropylene, and a fluoroalkyl vinyl ether.
The binder preferably further contains a polyvinylidene fluoride.
A mass ratio of the polyvinylidene fluoride to the fluorine-containing copolymer, polyvinylidene fluoride/fluorine-containing copolymer, is preferably 99/1 to 1/99.
The negative electrode mixture of the present disclosure preferably further contains a solvent.

In addition, according to the present disclosure, provided is a negative electrode including a current collector and a negative electrode material layer provided on one side or each of both sides of the current collector and formed from the negative electrode mixture.

In addition, according to the present disclosure, a secondary battery including the above negative electrode is provided.

EFFECTS OF INVENTION

According to the present disclosure, it is possible to provide a negative electrode mixture that allows a negative electrode material layer having excellent flexibility and extremely strongly adhering to a metal foil to be formed and allows a battery having excellent cycle characteristics and having a low gas increase rate even after being repeatedly charged and discharged to be obtained.

DESCRIPTION OF EMBODIMENTS

Hereinafter, specific embodiments of the present disclosure will be described in detail, but the present disclosure is not limited to the following embodiments.

A negative electrode mixture of the present disclosure contains a single-walled carbon nanotube, a negative electrode active material, and a binder.

Patent Document 1 proposes that the expansion and contraction of a negative electrode during charge and discharge is suppressed by forming a negative electrode active material layer containing a first negative electrode active material containing a silicon-based material and a second negative electrode active material containing a carbon-based material.

The present inventors studied means for suppressing the deterioration of battery performance due to the expansion and contraction of the negative electrode during the charge and discharge of the negative electrode from a completely different viewpoint from the related art. In addition, the present inventors found that use of a fluorine-containing copolymer containing a single-walled carbon nanotube and vinylidene fluoride unit and a unit of an other monomer other than vinylidene fluoride as a binder does not only allow a negative electrode material layer extremely strongly adhering to a metal foil to be formed, but also improves the flexibility of the obtained negative electrode material layer and allows a battery having excellent cycle characteristics even when the negative electrode is expanded and contracted during charge and discharge and having a low gas increase rate even after being repeatedly charged and discharged to be obtained. A reason therefor is not clear, but is presumed that the single-walled carbon nanotubes form a three-dimensional network structure that is unlikely to be cut even by a volume change of the negative electrode, and additionally, this three-dimensional network structure is maintained for a long period of time in the negative electrode material layer having excellent flexibility and strongly adhering to a metal foil (current collector) due to the binder containing the fluorine-containing copolymer.

(Single-walled carbon nanotubes)

The single-walled carbon nanotubes (SWCNTs) are a special kind of carbon material, which is known as a one-dimensional material. The single-walled carbon nanotube is made of a graphene sheet and has been wound to form a hollow tube having a wall as thick as one atom. The single-walled carbon nanotube has such a chemical structure and size and thereby exhibits excellent mechanical, electrical, thermal, and chemical characteristics.

The average outer diameter of the single-walled carbon nanotubes is preferably 2.5 nm or less, more preferably 2.0 nm or less, further preferably 1.8 nm or less, and preferably 1.0 nm or more, more preferably 1.1 nm or more, further preferably 1.2 nm or more. The average outer diameter of the single-walled carbon nanotubes can be determined from the light absorption spectrum or Raman spectrum obtained by ultraviolet-visible-near infrared spectroscopy (UV-Vis-NIR) or a transmission electron microscope (TEM) image.

The average G/D ratio measured by the Raman spectroscopy (wavelength: 532 nm) of the single-walled carbon nanotubes is preferably 2 or more, more preferably 5 or more, further preferably 10 or more, particularly preferably 30 or more, most preferably 40 or more and preferably 250 or less, more preferably 220 or less, further preferably 180 or less. The G/D ratio refers to the intensity ratio (G/D) of the G band to the D band of the Raman spectrum of the single-walled carbon nanotubes. The higher the average G/D ratio of the single-walled carbon nanotubes is, the higher the crystallinity of the single-walled carbon nanotubes is and the smaller the number of carbon nanotubes having impurity carbon or defects is.

The average length of the single-walled carbon nanotubes is preferably 0.1 to 50 μm, more preferably 0.5 to 20 μm, and further preferably 1 to 10 μm. The average length of the single-walled carbon nanotubes can be determined by obtaining an AFM image of the single-walled carbon nanotubes using an atomic force microscope (AFM) or obtaining a

TEM image of the single-walled carbon nanotubes using a transmission electron microscope (TEM), measuring the length of each single-walled carbon nanotube, and dividing the total value of the lengths by the number of the measured single-walled carbon nanotubes.

The content of the single-walled carbon nanotube in the negative electrode mixture is preferably 0.001 to 10% by mass, more preferably 0.01 to 2% by mass, and further preferably 0.01 to 1% by mass, based on the solid content mass of the negative electrode mixture. When the content of the single-walled carbon nanotube is within the above range, it is possible to sufficiently form a three-dimensional network structure of the single-walled carbon nanotubes in the obtained negative electrode material layer.

(Negative electrode active material)

The negative electrode mixture of the present disclosure contains, as the negative electrode active material, a negative electrode active material that exhibits a potential of 2.5 V or less vs. Li when alloyed with Li or bonded with Li, excluding the single-walled carbon nanotube.

The negative electrode active material may be a negative electrode active material containing a metal. The metal included in the negative electrode active material is usually a metal that can be electrochemically alloyed with an alkali metal such as Li or Na.

Examples of the negative electrode active material include a simple metal that can be electrochemically alloyed with Li such as Si, Zn, Sn, W, Al, Sb, Ge, Bi, or In; an alloy including Si, Zn, Sn, W, Al, Sb, Ge, Bi, or In; a lithium alloy such as a lithium aluminum alloy or a lithium tin alloy; a metal oxide such as tin oxide or silicon oxide; lithium titanate. One or two or more of these negative electrode active materials can be used.

The negative electrode active material is preferably a compound containing at least one element selected from the group consisting of Si, Sn, V, Nb, and Ti, more preferably Si (simple Si), an oxide of Si, an alloy containing Si, Sn (Sn carrier), an oxide of Sn, or an alloy containing Sn, and further preferably at least one selected from the group consisting of Si and $SiO_x$ ($0 < x < 2$) .

In addition, the negative electrode active material may be a carbonaceous material such as a graphite powder. The carbonaceous material can be used together with a negative electrode active material containing a metal. Examples of the carbonaceous material include natural graphite, an artificial carbonaceous substance, an artificial graphite substance, and a carbonaceous material obtained by one or more times of heat treatment in the range of 400°C to 3,200°C of a carbonaceous substance {for example, natural graphite, coal-based coke, petroleum-based coke, coal-based pitch, petroleum-based pitch, or a material obtained by oxidation treatment of any of these pitches; needle coke, pitch coke, or a carbon material obtained by partial graphitization of any of these cokes; a pyrolysate of an organic substance such as furnace black, acetylene black, ketjen black, or pitch-based carbon fiber; a carbonizable organic substance (for example, coal tar pitches from soft pitch to hard pitch; a coal-based heavy oil such as dry distillation/liquefaction oil; a straight-run heavy oil such as atmospheric residue or vacuum residue; a cracking-derived petroleum heavy oil such as ethylene tar as a byproduct generated in thermal cracking of crude oil, naphtha, or the like; further, an aromatic hydrocarbon such as acenaphthylene, decacyclene, anthracene, or phenanthrene; a N-ring compound such as phenazine or acridine; a S-ring compound such as thiophene or bithiophene; a polyphenylene such as biphenyl or terphenyl; polyvinyl chloride, polyvinyl alcohol, polyvinyl butyral, or a material obtained by insolubilizing any thereof; a nitrogen-containing organic polymer such as polyacrylonitrile or polypyrrole; a sulfur-containing organic polymer such as polythiophene or polystyrene; a natural polymer such as a polysaccharide typified by cellulose, lignin, mannan, polygalacturonic acid, chitosan, or saccharose; a thermoplastic resin such as polyphenylene sulfide or polyphenylene oxide; a thermosetting resin such as a furfuryl alcohol resin, a phenolformaldehyde resin, or an imide resin) and a carbide of any of these; and a solution obtained by dissolving a carbonizable organic substance in a low-molecular-weight organic solvent such as benzene, toluene, xylene, quinoline, or n-hexane, and a carbide thereof}.

When the negative electrode mixture contains a negative electrode active material containing a metal and a carbonaceous material, the mass ratio of the negative electrode active material containing a metal to the carbonaceous material is preferably 1/99 to 99/1, more preferably 5/95 to 95/5, and further preferably 10/90 to 90/10.

The content of the negative electrode active material in the negative electrode mixture is preferably 80.0 to 99.9% by mass and more preferably 90.0 to 99.0% by mass, based on the mass of the negative electrode mixture.

(Binder)

The binder that is contained in the negative electrode mixture of the present disclosure contains a fluorine-containing copolymer containing vinylidene fluoride (VdF) unit and a unit of an other monomer other than VdF. The other monomer may be a fluorinated monomer or a non-fluorinated monomer.

Examples of the fluorinated monomer, excluding VdF, include tetrafluoroethylene (TFE), vinyl fluoride, trifluoroethylene, chlorotrifluoroethylene (CTFE), fluoroalkyl vinyl ether, hexafluoropropylene (HFP), a (perfluoroalkyl)ethylene,

2,3,3,3-tetrafluoropropene, and trans-1,3,3,3-tetrafluoropropene.

The fluoroalkyl vinyl ether is preferably a fluoroalkyl vinyl ether having a fluoroalkyl group having 1 to 5 carbon atoms and more preferably at least one selected from the group consisting of perfluoro(methyl vinyl ether) (PMVE), perfluoro(ethyl vinyl ether), and perfluoro(propyl vinyl ether).

The fluorinated monomer is preferably at least one selected from the group consisting of TFE, CTFE, 2,3,3,3-tetrafluoropropene, HFP, and fluoroalkyl vinyl ether, more preferably at least one selected from the group consisting of TFE and HFP, and particularly preferably TFE.

The fluorinated monomer, excluding VdF, may or may not have a polar group.

Examples of the non-fluorinated monomer include a non-fluorinated monomer having no polar group such as ethylene or propylene, and a non-fluorinated monomer having a polar group (hereinafter, sometimes referred to as a polar group-containing monomer).

When a non-fluorinated monomer having a polar group is used, the polar group is introduced into the fluorine-containing copolymer, and this allows far superior adhesion between a coating layer and a metal foil to be obtained. The polar group is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional group obtained by removing hydrogen from ammonia or a primary or secondary amine.

The carbonyl group-containing group is a functional group having a carbonyl group (-C(=O)-). The carbonyl group-containing group is preferably a group represented by the general formula: -COOR wherein R represents a hydrogen atom, an alkyl group, or a hydroxyalkyl group, or a carboxylic anhydride group, and more preferably a group represented by the general formula: -COOR. The number of carbon atoms of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)OH$, $-COOCH(CH_3)CH_2OH$, -COOH, -$COOCH_3$, and $-COOC_2H_5$. When the group represented by the general formula: -COOR is -COOH or includes -COOH, in some embodiments, -COOH may be a carboxylate such as a metal carboxylate or ammonium carboxylate.

In addition, in some embodiments, the carbonyl group-containing group may be a group represented by the general formula: -X-COOR wherein X is an atomic group having a main chain composed of 1 to 20 atoms and having a molecular weight of 500 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

Examples of the above polar group-containing monomer include a hydroxyalkyl (meth)acrylate such as hydroxyethyl acrylate or 2-hydroxypropyl acrylate; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, acryloyloxypropyl succinate, methacryloyloxyethyl succinate, acryloyloxyethyl phthalate, or methacryloyloxyethyl phthalate; a monoester of an unsaturated dibasic acid such as monomethyl maleate, monoethyl maleate, monomethyl citraconate, or monoethyl citraconate; a monomer (4) represented by a general formula (4):

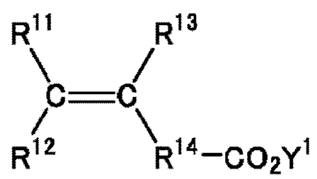

wherein $R^{11}$ to $R^{13}$ each independently represent a hydrogen atom or a hydrocarbon group having 1 to 8 carbon atoms, $R^{14}$ represents a single bond or a hydrocarbon group having 1 to 8 carbon atoms, and $Y^1$ represents an inorganic cation and/or an organic cation; an unsaturated dibasic acid such as maleic acid, maleic anhydride, citraconic acid, or citraconic anhydride.

The polar group-containing monomer unit that the fluorine-containing copolymer can contain is preferably a unit based on the monomer (4) represented by the general formula (4).

In the general formula (4), $Y^1$ represents an inorganic cation and/or an organic cation. Examples of the inorganic

cation include a cation such as H, Li, Na, K, Mg, Ca, Al, or Fe. Examples of the organic cation include a cation such as $NH_4$, $NH_3R^{15}$, $NH_2R^{15}{}_2$, $NHR^{15}{}_3$, or $NR^{15}{}_4$ wherein $R^{15}$ independently represents an alkyl group having 1 to 4 carbon atoms. $Y^1$ is preferably H, Li, Na, K, Mg, Ca, Al, or $NH_4$, more preferably H, Li, Na, K, Mg, Al, or $NH_4$, further preferably H, Li, Al, or $NH_4$, and particularly preferably H. Specific examples of the inorganic cation and the organic cation are described by omitting their signs and valences for convenience.

In the general formula (4), $R^{11}$ to $R^{13}$ each independently represent a hydrogen atom or a hydrocarbon group having 1 to 8 carbon atoms. The hydrocarbon group is a monovalent hydrocarbon group. The hydrocarbon group preferably has 4 or less carbon atoms. Examples of the hydrocarbon group include an alkyl group, an alkenyl group, and an alkynyl group having the above number of carbon atoms, and a methyl group or an ethyl group is preferable. $R^{11}$ and $R^{12}$ are preferably each independently a hydrogen atom, a methyl group, or an ethyl group, and $R^{13}$ is preferably a hydrogen atom or a methyl group.

In the general formula (4), $R^{14}$ represents a single bond or a hydrocarbon group having 1 to 8 carbon atoms. The hydrocarbon group is a divalent hydrocarbon group. The hydrocarbon group preferably has 4 or less carbon atoms. Examples of the hydrocarbon group include an alkylene group and an alkenylene group having the above number of carbon atoms, and among these, at least one selected from the group consisting of a methylene group, an ethylene group, an ethylidene group, a propylidene group, and an isopropylidene group is preferable, and a methylene group is more preferable.

The monomer (4) is preferably at least one selected from the group consisting of (meth)acrylic acid and a salt thereof, vinylacetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt thereof.

The other monomer is preferably at least one selected from the group consisting of TFE, CTFE, (meth)acrylic acid, 2,3,3,3-tetrafluoropropene, HFP, and fluoroalkyl vinyl ether. (Meth)acrylic acid includes acrylic acid and methacrylic acid.

The content of the other monomer unit of the fluorine-containing copolymer is preferably 0.0001 to 50.0 mol%, more preferably 0.01 mol% or more, further preferably 0.10 mol% or more, and more preferably 45.0 mol% or less, further preferably 40.0 mol% or less, particularly preferably 35.0 mol% or less, based on all monomer units.

The content of the VdF unit of the fluorine-containing copolymer is 50.0 to 99.9999 mol%, more preferably 55.0 mol% or more, further preferably 60.0 mol% or more, particularly preferably 65.0 mol% or more, and more preferably 99.99 mol% or less, further preferably 99.90 mol% or less, based on all monomer units.

When the fluorine-containing copolymer contains the fluorinated monomer unit as the other monomer unit, the content of the fluorinated monomer unit is preferably 0.0001 to 50.0 mol%, more preferably 2.0 mol% or more, further preferably 3.0 mol% or more, particularly preferably 4.0 mol% or more, and more preferably 45.0 mol% or less, further preferably 40.0 mol% or less, particularly preferably 35.0 mol% or less, based on all monomer units.

When the fluorine-containing copolymer contains the fluorinated monomer unit as the other monomer unit, the content of the VdF unit of the fluorine-containing copolymer is 50.0 to 99.999 mol%, more preferably 55.0 mol% or more, further preferably 60.0 mol% or more, particularly preferably 65.0 mol% or more, and more preferably 98.0 mol% or less, further preferably 97.0 mol% or less, particularly preferably 96.0 mol% or less, based on all monomer units.

When the fluorine-containing copolymer contains the non-fluorinated monomer unit such as the polar group-containing monomer as the other monomer unit, the content of the non-fluorinated monomer unit is preferably 0.0001 to 50.0 mol%, more preferably 0.01 mol% or more, further preferably 0.10 mol% or more, and more preferably 5.0 mol% or less, further preferably 3.0 mol% or less, particularly preferably 1.5 mol% or less, based on all monomer units.

When the fluorine-containing copolymer contains the non-fluorinated monomer unit as the other monomer unit, the content of the VdF unit of the fluorine-containing copolymer is preferably 50.0 to 99.999 mol%, more preferably 95.0 mol% or more, further preferably 97.0 mol% or more, particularly preferably 98.5 mol% or more, and more preferably 99.99 mol% or less, further preferably 99.90 mol% or less, based on all monomer units.

In the present disclosure, the formulation of the fluorine-containing copolymer can be measured, for example, by $^{19}F$-NMR measurement. In addition, when the fluorine-containing copolymer contains the polar group-containing monomer unit as the other monomer unit, the content of the polar group-containing monomer unit can be measured, for example, when the polar group is an acid group such as a carboxylic acid, by acid-base titration of the acid group.

The weight average molecular weight, in terms of polystyrene, of the fluorine-containing copolymer is preferably 10,000 to 3,000,000, more preferably 30,000 or more, further preferably 50,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) using dimethylformamide as a solvent.

The number average molecular weight, in terms of polystyrene, of the fluorine-containing copolymer is preferably 7,000 to 1,500,000, more preferably 21,000 or more, further preferably 35,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

Examples of the fluorine-containing copolymer include a VdF/(meth)acrylic acid copolymer, a VdF/TFE copolymer, a VdF/HFP copolymer, a VdF/fluoroalkyl vinyl ether copolymer, a VdF/TFE/HFP copolymer, a VdF/2,3,3,3-tetrafluoropropene copolymer, a VdF/TFE/2,3,3,3-tetrafluoropropene copolymer, a VdF/TFE/(meth)acrylic acid copolymer, a VdF/HFP/(meth)acrylic acid copolymer, a VdF/CTFE copolymer, a VdF/TFE/4-pentenoic acid copolymer, a VdF/TFE/3-butenoic acid copolymer, a VdF/TFE/HFP/(meth)acrylic acid copolymer, a VdF/TFE/HFP/4-pentenoic acid copolymer, a VdF/TFE/HFP/3-butenoic acid copolymer, a VdF/TFE/2-carboxyethyl acrylate copolymer, a VdF/TFE/HFP/2-carboxyethyl acrylate copolymer, a VdF/TFE/acryloyloxyethyl succinate copolymer, and a VdF/TFE/HFP/acryloyloxyethyl succinate copolymer.

The fluorine-containing copolymer is, among these, preferably at least one selected from the group consisting of a VdF/TFE copolymer, a VdF/CTFE copolymer, a VdF/(meth)acrylic acid copolymer, a VdF/2,3,3,3-tetrafluoropropene copolymer, a VdF/HFP copolymer, and a VdF/fluoroalkyl vinyl ether copolymer.

The VdF/TFE copolymer contains a VdF unit and a TFE unit. Use of the VdF/TFE copolymer as the copolymer allows the negative electrode mixture to be extremely easily formed, provides the negative electrode mixture having extremely excellent slurry stability, and allows the coating layer having extremely excellent flexibility to be formed. The content of the VdF unit is preferably 50.0 to 95.0 mol%, more preferably 55.0 mol% or more, further preferably 60.0 mol% or more, and more preferably 92.0 mol% or less, further preferably 89.0 mol% or less, based on all monomer units of the VdF/TFE copolymer. The content of the TFE unit is preferably 50.0 to 5.0 mol%, more preferably 45.0 mol% or less, further preferably 40.0 mol% or less, and more preferably 8.0 mol% or more, further preferably 11.0 mol% or more, based on all monomer units of the VdF/TFE copolymer.

The VdF/TFE copolymer may be a copolymer including a unit based on a monomer copolymerizable with VdF and TFE, excluding VdF and TFE, aside from the VdF unit and the TFE unit. The content of the unit based on the monomer copolymerizable with VdF and TFE is preferably 3.0 mol% or less, based on all monomer units of the VdF/TFE copolymer from the viewpoint of electrolytic solution swelling resistance.

Examples of the monomer copolymerizable with VdF and TFE include the above fluorinated monomers and the above non-fluorinated monomers. The monomer copolymerizable with VdF and TFE is, among these, preferably at least one selected from the group consisting of the fluorinated monomers and the polar group-containing monomers and more preferably at least one selected from the group consisting of HFP, 2,3,3,3-tetrafluoropropene, and the monomer (4).

The weight average molecular weight, in terms of polystyrene, of the VdF/TFE copolymer is preferably 50,000 to 2,000,000, more preferably 80,000 to 1,700,000, and further preferably 100,000 to 1,500,000.

The number average molecular weight, in terms of polystyrene, of the VdF/TFE copolymer is preferably 35,000 to 1,400,000, more preferably 40,000 to 1,300,000, and further preferably 50,000 to 1,200,000.

The VdF/CTFE copolymer contains a VdF unit and a CTFE unit. Use of the VdF/CTFE copolymer as the copolymer allows the negative electrode mixture to be extremely easily formed, and allows the coating layer extremely strongly adhering to the metal foil to be formed. The content of the VdF unit is preferably 80.0 to 98.0 mol%, more preferably 85.0 mol% or more, further preferably 90.0 mol% or more, and more preferably 97.5 mol% or less, further preferably 97.0 mol% or less, based on all monomer units of the VdF/CTFE copolymer. The content of the CTFE unit is preferably 20.0 to 2.0 mol%, more preferably 15.0 mol% or less, further preferably 10.0 mol% or less, and more preferably 2.5 mol% or more, further preferably 3.0 mol% or more, based on all monomer units of the VdF/CTFE copolymer.

The VdF/CTFE copolymer may be a copolymer including a unit based on a monomer that can be copolymerized with VdF and CTFE, excluding VdF and CTFE, aside from the VdF unit and the CTFE unit. The content of the unit based on the monomer that can be copolymerized with VdF and TFE is preferably 3.0 mol% or less, based on all monomer units of the VdF/CTFE copolymer from the viewpoint of electrolytic solution swelling resistance.

Examples of the monomer copolymerizable with VdF and CTFE include the above fluorinated monomers and the above non-fluorinated monomers. The monomer copolymerizable with VdF and CTFE is, among these, preferably at least one selected from the group consisting of the fluorinated monomers and the polar group-containing monomers, more preferably at least one selected from the group consisting of TFE, HFP, 2,3,3,3-tetrafluoropropene, and the monomer (4), and further preferably TFE.

The weight average molecular weight, in terms of polystyrene, of the VdF/CTFE copolymer is preferably 50,000 to 2,000,000, more preferably 80,000 to 1,700,000, and further preferably 100,000 to 1,500,000.

The number average molecular weight, in terms of polystyrene, of the VdF/CTFE copolymer is preferably 35,000 to 1,400,000, more preferably 40,000 to 1,300,000, and further preferably 50,000 to 1,200,000.

The VdF/(meth)acrylic acid copolymer contains a VdF unit and a (meth)acrylic acid unit. Use of the VdF/(meth) acrylic acid copolymer as the copolymer allows the negative electrode mixture to be extremely easily formed, and allows the coating layer extremely strongly adhering to the metal foil to be formed. The content of the (meth)acrylic acid unit is preferably 0.0001 to 5.0 mol%, more preferably 0.01 to 3.0 mol%, and further preferably 0.10 to 1.5 mol%.

The content of the VdF unit of the VdF/(meth)acrylic acid copolymer is preferably 95.0 to 99.9999 mol%, more preferably 97.0 to 99.99 mol%, and further preferably 98.5 to 99.90 mol%, based on all monomer units.

The weight average molecular weight, in terms of polystyrene, of the VdF/(meth)acrylic acid copolymer is

preferably 50,000 to 3,000,000, more preferably 80,000 or more, further preferably 100,000 or more, particularly preferably 2,000,000 or more, and more preferably 2,400,000 or less, further preferably 2,200,000 or less, particularly preferably 2,000,000 or less.

The number average molecular weight, in terms of polystyrene, of the VdF/(meth)acrylic acid copolymer is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less.

The VdF/2,3,3,3-tetrafluoropropene copolymer contains a VdF unit and a 2,3,3,3-tetrafluoropropene unit. Use of the VdF/2,3,3,3-tetrafluoropropene copolymer as the copolymer allows the negative electrode mixture to be extremely easily formed, and allows the coating layer having extremely excellent flexibility and electric conductivity to be formed. The content of the VdF unit is preferably 50.0 to 98.0 mol%, more preferably 55.0 mol% or more, further preferably 60.0 mol% or more, particularly preferably 65.0 mol% or more, and more preferably 97.0 mol% or less, further preferably 96.0 mol% or less, based on all monomer units of the VdF/2,3,3,3-tetrafluoropropene copolymer. The content of the 2,3,3,3-tetrafluoropropene unit is preferably 2.0 to 50.0 mol%, more preferably 3.0 mol% or more, further preferably 4.0 mol% or more, and more preferably 45.0 mol% or less, further preferably 40.0 mol% or less, particularly preferably 35.0 mol% or less, based on all monomer units of the VdF/TFE copolymer.

The VdF/2,3,3,3-tetrafluoropropene copolymer may be a copolymer including a unit based on a monomer that can be copolymerized with VdF and 2,3,3,3-tetrafluoropropene, excluding VdF and 2,3,3,3-tetrafluoropropene, aside from the VdF unit and the 2,3,3,3-tetrafluoropropene unit. The content of the unit based on the monomer that can be copolymerized with VdF and 2,3,3,3-tetrafluoropropene is preferably 3.0 mol% or less, based on all monomer units of the VdF/2,3,3,3-tetrafluoropropene copolymer from the viewpoint of electrolytic solution swelling resistance.

Examples of the monomer that can be copolymerized with VdF and 2,3,3,3-tetrafluoropropene include the above fluorinated monomers and the above non-fluorinated monomers. The monomer that can be copolymerized with VdF and 2,3,3,3-tetrafluoropropene is, among these, preferably at least one selected from the group consisting of the fluorinated monomers and the polar group-containing monomers and more preferably at least one selected from the group consisting of TFE, HFP, and the monomer (4).

The weight average molecular weight, in terms of polystyrene, of the VdF/2,3,3,3-tetrafluoropropene copolymer is preferably 10,000 to 2,000,000, more preferably 30,000 to 1,700,000, and further preferably 5,000 to 1,500,000.

The number average molecular weight, in terms of polystyrene, of the VdF/2,3,3,3-tetrafluoropropene copolymer is preferably 7,000 to 1,400,000, more preferably 21,000 to 1,300,000, and further preferably 35,000 to 1,200,000.

The VdF/HFP copolymer contains a VdF unit and a HFP unit. Use of the VdF/HFP copolymer as the copolymer allows the negative electrode mixture to be extremely easily formed, and allows the coating layer extremely strongly adhering to the metal foil to be formed. The content of the VdF unit is preferably 80.0 to 98.0 mol%, more preferably 83.0 mol% or more, further preferably 85.0 mol% or more, and more preferably 97.0 mol% or less, further preferably 96.0 mol% or less, based on all monomer units of the VdF/HFP copolymer. The content of the HFP unit is preferably 20.0 to 2.0 mol%, more preferably 17.0 mol% or less, further preferably 15.0 mol% or less, and more preferably 3.0 mol% or more, further preferably 4.0 mol% or more, based on all monomer units of the VdF/HFP copolymer.

The VdF/HFP copolymer may be a copolymer including a unit based on a monomer copolymerizable with VdF and HFP, excluding VdF and HFP, aside from the VdF unit and the HFP unit. The content of the unit based on the monomer copolymerizable with VdF and HFP is preferably 3.0 mol% or less, based on all monomer units of the VdF/HFP copolymer from the viewpoint of electrolytic solution swelling resistance.

Examples of the monomer copolymerizable with VdF and HFP include the above fluorinated monomers and the above non-fluorinated monomers. The monomer copolymerizable with VdF and HFP is, among these, preferably at least one selected from the group consisting of the fluorinated monomers and the polar group-containing monomers, more preferably at least one selected from the group consisting of TFE, 2,3,3,3-tetrafluoropropene, and the monomer (4), and further preferably the monomer (4).

The weight average molecular weight, in terms of polystyrene, of the VdF/HFP copolymer is preferably 50,000 to 2,000,000, more preferably 80,000 to 1,700,000, and further preferably 100,000 to 1,500,000.

The number average molecular weight, in terms of polystyrene, of the VdF/HFP copolymer is preferably 35,000 to 1,400,000, more preferably 40,000 to 1,300,000, and further preferably 50,000 to 1,200,000.

The VdF/fluoroalkyl vinyl ether copolymer contains a VdF unit and a fluoroalkyl vinyl ether unit. The content of the VdF unit is preferably 80.0 to 98.0 mol%, more preferably 83.0 mol% or more, further preferably 85.0 mol% or more, and more preferably 97.0 mol% or less, further preferably 96.0 mol% or less, based on all monomer units of the VdF/fluoroalkyl vinyl ether copolymer. The content of the fluoroalkyl vinyl ether unit is preferably 20.0 to 2.0 mol%, more preferably 17.0 mol% or less, further preferably 15.0 mol% or less, and more preferably 3.0 mol% or more, further preferably 4.0 mol% or less, based on all monomer units of the VdF/fluoroalkyl vinyl ether copolymer.

The VdF/fluoroalkyl vinyl ether copolymer may be a copolymer including a unit based on a monomer copolymerizable with VdF and fluoroalkyl vinyl ether, excluding VdF and fluoroalkyl vinyl ether, aside from the VdF unit and the

fluoroalkyl vinyl ether unit. The content of the unit based on the monomer copolymerizable with VdF and fluoroalkyl vinyl ether is preferably 3.0 mol% or less, based on all monomer units of the VdF/fluoroalkyl vinyl ether copolymer from the viewpoint of electrolytic solution swelling resistance.

Examples of the monomer copolymerizable with VdF and fluoroalkyl vinyl ether include the above fluorinated monomers and the above non-fluorinated monomers. The monomer copolymerizable with VdF and fluoroalkyl vinyl ether is, among these, preferably at least one selected from the group consisting of the fluorinated monomers and the polar group-containing monomers, more preferably at least one selected from the group consisting of TFE, 2,3,3,3-tetrafluoropropene, and the monomer (4), and further preferably the monomer (4).

The weight average molecular weight, in terms of polystyrene, of the VdF/fluoroalkyl vinyl ether copolymer is preferably 50,000 to 2,000,000, more preferably 80,000 to 1,700,000, and further preferably 100,000 to 1,500,000.

The number average molecular weight, in terms of polystyrene, of the VdF/fluoroalkyl vinyl ether copolymer is preferably 35,000 to 1,400,000, more preferably 40,000 to 1,300,000, and further preferably 50,000 to 1,200,000.

The binder also preferably further contains a polyvinylidene fluoride (PVdF). The PVdF is a polymer containing a VdF unit, and is a polymer different from the above fluorine-containing copolymer. The PVdF may be a VdF homopolymer consisting only of a VdF unit in some embodiments, and may be a polymer containing a VdF unit and a unit based on a monomer copolymerizable with VdF in other embodiments.

In the PVdF, the monomer copolymerizable with VdF is preferably a monomer different from tetrafluoroethylene (TFE). That is, the PVdF preferably does not contain the TFE unit.

In the PVdF, examples of the monomer copolymerizable with VdF include a fluorinated monomer and a non-fluorinated monomer, and a fluorinated monomer is preferable. Examples of the fluorinated monomer include vinyl fluoride, trifluoroethylene, chlorotrifluoroethylene (CTFE), fluoroalkyl vinyl ether, hexafluoropropylene (HFP), (perfluoroalkyl)ethylene, 2,3,3,3-tetrafluoropropene, and trans-1,3,3,3-tetrafluoropropene. Examples of the non-fluorinated monomer include ethylene and propylene.

In the PVdF, the monomer copolymerizable with VdF is preferably at least one fluorinated monomer selected from the group consisting of CTFE, fluoroalkyl vinyl ether, HFP, and 2,3,3,3-tetrafluoropropene, and more preferably at least one fluorinated monomer selected from the group consisting of CTFE, HFP, and fluoroalkyl vinyl ether.

In the PVdF, the content of the monomer unit copolymerizable with VdF is preferably 0 to 5.0 mol% and more preferably 0 to 3.0 mol% based on all monomer units. In the PVdF, the content of a fluorinated monomer unit copolymerizable with VdF is preferably less than 5.0 mol%, more preferably less than 3.0 mol%, and further preferably less than 1.0 mol%, based on all monomer units.

In the present disclosure, the formulation of a PVdF can be measured, for example, by $^{19}$F-NMR measurement.

The PVdF may have a polar group. The polar group is not limited as long as it is a functional group having polarity, and is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional group obtained by removing hydrogen from ammonia or a primary or secondary amine.

The carbonyl group-containing group is a functional group having a carbonyl group (-C(=O)-). The carbonyl group-containing group is preferably a group represented by the general formula: -COOR wherein R represents a hydrogen atom, an alkyl group, or a hydroxyalkyl group, or a carboxylic anhydride group, and more preferably a group represented by the general formula: -COOR. The number of carbon atoms of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)OH$, $-COOCH(CH_3)CH_2OH$, -COOH, $-COOCH_3$, and $-COOC_2H_5$. When the group represented by the general formula: -COOR is -COOH or includes -COOH, in some embodiments, -COOH is a carboxylate such as a metal carboxylate or ammonium carboxylate.

In addition, in some embodiments, the carbonyl group-containing group may be a group represented by the general formula: -X-COOR wherein X is an atomic group having a main chain composed of 2 to 15 atoms and the molecular weight of the atomic group represented by X is preferably 350 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

The polar group can be introduced into a PVdF by polymerizing VdF and a monomer having the polar group (hereinafter, referred to as a polar group-containing monomer), or can be introduced into a PVdF by reacting the PVdF with a compound having the polar group, and it is preferable to polymerize VdF and the polar group-containing monomer from

the viewpoint of productivity.

By polymerizing VdF and the polar group-containing monomer, a PVdF containing a VdF unit and a polar group-containing monomer unit is obtained. That is, the PVdF preferably contains the polar group-containing monomer unit. The content of the polar group-containing monomer unit is preferably 0.001 to 5.0 mol%, more preferably 0.01 to 3.0 mol%, and further preferably 0.10 to 1.5 mol%, based on all monomer units.

In the present disclosure, the content of the polar group-containing monomer unit in the PVdF, for example wherein the polar group is an acid group such as a carboxylic acid, can be measured by acid-base titration of the acid group.

Examples of the polar group-containing monomer include a hydroxyalkyl (meth)acrylate such as hydroxyethyl acrylate or 2-hydroxypropyl acrylate; an unsaturated monobasic acid such as (meth)acrylic acid, crotonic acid, vinylacetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

When a PVdF is reacted with a compound having the polar group to introduce the polar group into the PVdF, the compound having the polar group may be the polar group-containing monomer, or a silane-based coupling agent or a titanate-based coupling agent having a group that is reactive with the PVdF and a hydrolyzable group. The hydrolyzable group is preferably an alkoxy group. When a coupling agent is used, the coupling agent can be reacted with a PVdF dissolved or swollen in a solvent to add the polar group to the PVdF.

The PVdF may also be obtained by partially dehydrofluorinating a PVdF using a base and then further reacting the partially dehydrofluorinated PVdF with an oxidizing agent. Examples of the oxidizing agent include hydrogen peroxide, a hypochlorite, palladium halide, chromium halide, an alkali metal permanganate, a peracid compound, an alkyl peroxide, and an alkyl persulfate.

The content of the VdF unit of the PVdF is preferably more than 95.0 mol%, more preferably more than 97.0 mol%, and further preferably more than 99.0 mol%, based on all monomer units.

In addition, the content of the VdF unit of the PVdF is preferably 95.0 to 99.999 mol%, more preferably 97.0 mol% or more, further preferably 98.5 mol% or more, and more preferably 99.99 mol% or less, further preferably 99.90 mol% or less, based on all monomer units.

The weight average molecular weight, in terms of polystyrene, of the PVdF is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) using N,N-dimethylformamide as a solvent. In addition, the weight average molecular weight of the PVdF may be 1,000,000 or more in some embodiments, and may be 1,500,000 or more in other embodiments.

The number average molecular weight, in terms of polystyrene, of the PVdF is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The melting point of the PVdF is preferably 100 to 240°C. The melting point can be determined as the temperature corresponding to the maximum value on the heat of fusion curve when the temperature is raised at a rate of 10°C/min by using a differential scanning calorimetry (DSC) apparatus.

When the binder contains the PVdF and the fluoroine-containing copolymer, the mass ratio of the PVdF to the fluorine-containing copolymer in the binder is preferably 99/1 to 1/99, more preferably 97/3 to 3/97, further preferably 95/5 to 5/95, still further preferably 90/10 to 10/90, particularly preferably 85/15 to 15/85, and most preferably 80/20 to 40/60.

The binder may contain an other polymer, aside from the PVdF and the fluorine-containing copolymer. Examples of the other polymer include polymethacrylate, polymethyl methacrylate, polyacrylonitrile, polyimide, polyamide, polyamideimide, polycarbonate, styrene elastomer, and butadiene elastomer.

The content of the fluorine-containing copolymer in the binder is preferably 1% by mass or more, more preferably 30 by mass or more, further preferably 5% by mass or more, particularly preferably 10% by mass or more, most preferably 15% by mass or more, and may be 100% by mass or less in some embodiments, based on the mass of the binder.

The content of the binder in the negative electrode mixture is preferably 0.1 to 20% by mass, more preferably 0.2 to 10% by mass, and further preferably 0.5 to 5% by mass, based on the mass of the negative electrode mixture.

(Solvent)

The negative electrode mixture of the present disclosure preferably contains a solvent. Examples of the solvent include water or an organic solvent, and an organic solvent is preferable from the viewpoint of being able to greatly reduce the possibility of moisture remaining in the negative electrode material layer when the negative electrode material layer is formed by using the negative electrode mixture.

Examples of the organic solvent include a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; an ether-based solvent such as tetrahydrofuran or dioxane; a β-alkoxypropionamide such as β-methoxy-N,N-dimethylpropionamide, β-n-butoxy-N,N-dimethylpropionamide, or β-n-hexyloxy-N,N-dimethylpropionamide; and a low-boiling general-purpose organic solvent such as mixed solvents thereof.

The organic solvent can also be a solvent represented by a general formula (1).

General formula (1):

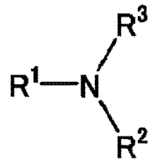

wherein $R^1$, $R^2$, and $R^3$ are each independently H or a monovalent substituent, provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

The solvent represented by a general formula (1) is preferably at least one selected from the group consisting of 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetoacetamide, N-octyl-2-pyrrolidone, and N,N-diethylacetamide.

From the viewpoint of excellent applicability, the solvent is, among others, preferably water, or at least one selected from the group consisting of N,N-dimethylformamide, N,N-dimethylacetamide, N-methyl-2-pyrrolidone, and a solvent represented by the general formula (1), more preferably at least one selected from the group consisting of N,N-dimethylformamide, N,N-dimethylacetamide, N-methyl-2-pyrrolidone, 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetoacetamide, N-octyl-2-pyrrolidone, and N,N-diethylacetamide, further preferably at least one selected from the group consisting of N-methyl-2-pyrrolidone, N,N-dimethylacetamide, 3-methoxy-N,N-dimethylpropanamide, N-ethyl-2-pyrrolidone, and N-butyl-2-pyrrolidone, and particularly preferably at least one selected from the group consisting of N-methyl-2-pyrrolidone and N,N-dimethylacetamide.

The amount of the solvent in the negative electrode mixture is determined in consideration of the coating property to the current collector, formation of a thin film after drying, and the like. Usually, the proportion by mass ratio of the binder to the solvent is 0.5:99.5 to 20:80.

(Other component)

The negative electrode mixture of the present disclosure may further contain an other component such as a conductive aid, excluding a carbonaceous material that is used as a negative electrode mixture, a leveling agent or a reinforcement material.

The negative electrode mixture can be prepared by mixing a single-walled carbon nanotube, a binder, and a solvent and then adding and further mixing a negative electrode active material or the like to and with the obtained mixture. Then, the obtained negative electrode mixture is uniformly applied to a current collector such as a metal foil or a metal net, dried, and optionally pressed to form a thin negative electrode material layer on the current collector to obtain a thin film electrode. In addition, the negative electrode mixture may be prepared by first mixing a single-walled carbon nanotube, a negative electrode active material, and a binder and then adding a solvent thereto.

(Use)

The negative electrode mixture of the present disclosure can be suitably used as a material forming a secondary

battery. Even when a negative electrode active material having a volume that significantly expands during charge and significantly contracts during discharge is used, use of the negative electrode mixture of the present disclosure allows a negative electrode material layer having excellent flexibility and extremely strongly adhering to a metal foil to be formed and allows a battery having excellent cycle characteristics and having a low gas increase rate even after being repeatedly charged and discharged to be obtained. Therefore, the negative electrode mixture of the present disclosure is suitable as a negative electrode mixture that is used for a negative electrode of a secondary battery. A secondary battery to which the negative electrode mixture of the present disclosure is applied includes a positive electrode obtained by holding a positive electrode mixture in a positive electrode current collector, a negative electrode obtained by holding a negative electrode mixture in a negative electrode current collector, and an electrolytic solution.

The negative electrode mixture of the present disclosure may be a negative electrode mixture for a secondary battery in some embodiments or a negative electrode mixture for a lithium ion secondary battery in other embodiments.

(Negative electrode)

A negative electrode of the present disclosure includes a current collector and a negative electrode material layer. The negative electrode material layer is formed by using the negative electrode mixture of the present disclosure, and may be provided on one side of the current collector in some embodiments, and may be provided on each of both sides thereof in other embodiments.

Examples of the current collector included in the negative electrode of the present disclosure include a metal foil or a metal net of iron, stainless steel, copper, aluminum, nickel, titanium, or the like, and among these, a copper foil is preferable.

The negative electrode of the present disclosure can be suitably produced by a production method involving applying the negative electrode mixture of the present disclosure to a current collector. After applying the negative electrode mixture, further, the coating film may be dried and arbitrarily heat-treated, and the resulting dry coating film may be pressed.

(Secondary battery)

In addition, according to the present disclosure, a secondary battery including the above negative electrode is provided. It is preferable that the secondary battery of the present disclosure includes a positive electrode, a negative electrode, and a non-aqueous electrolyte and the negative electrode is the above negative electrode.

The secondary battery of the present disclosure has a negative electrode formed by using the negative electrode mixture of the present disclosure, and thus has excellent cycle retention rate and a low gas increase rate.

The non-aqueous electrolytic solution is not limited, and may be one or two or more of known solvents such as propylene carbonate, ethylene carbonate, butylene carbonate, $\gamma$-butyl lactone, 1,2-dimethoxyethane, 1,2-diethoxyethane, dimethyl carbonate, diethyl carbonate, or ethyl methyl carbonate. Any conventionally known electrolyte can also be used, and $LiClO_4$, $LiAsF_6$, $LiPF_6$, $LiBF_4$, LiCl, LiBr, $CH_3SO_3Li$, $CF_3SO_3Li$, cesium carbonate, or the like can be used.

The negative electrode of the present disclosure can be suitably used as a negative electrode for a wound secondary battery. In addition, the secondary battery of the present disclosure may be a wound secondary battery in some embodiments.

The negative electrode of the present disclosure is useful not only for the lithium ion secondary battery using a liquid electrolyte described above, but also for a polymer electrolyte lithium secondary battery, as a negative electrode for a non-aqueous electrolyte secondary battery. In addition, the negative electrode of the present disclosure is also useful for an electric double layer capacitor.

The embodiments have been described above, and it will be understood that various modifications of the embodiments and details are possible without departing from the spirit and scope of the claims.

EXAMPLES

Next, the embodiments of the present disclosure will be described with reference to Examples, but the present disclosure is not limited only to the Examples.

The numerical values in the Examples were measured by the following methods.

(Ratio between VdF unit and TFE unit in fluorine-containing copolymer)

The ratio between VdF unit and TFE unit in a fluorine-containing copolymer was measured in a DMF-$d_7$ solution state of a polymer by $^{19}$F-NMR measurement using an NMR analyzer (manufactured by Agilent Technologies Japan, Ltd.,

VNS400MHz).

In the $^{19}$F-NMR measurement, the areas (A, B, C, and D) of the following peaks were determined, and the ratio between the VdF unit and the TFE unit was calculated.

A: Area of a peak of -86 ppm to -98 ppm
B: Area of a peak of -105 ppm to -118 ppm
C: Area of a peak of -119 ppm to -122 ppm
D: Area of a peak of -122 ppm to -126 ppm

Proportion of VdF unit: (4A + 2B)/(4A + 3B + 2C + 2D) × 100 [mol%]

Proportion of TFE unit: (B + 2C + 2D)/(4A + 3B + 2C + 2D) × 100 [mol%]

(Weight average molecular weight)

The weight average molecular weight was measured by gel permeation chromatography (GPC). The weight average molecular weight was calculated from data (reference: polystyrene) obtained by measurement using HLC-8320GPC and columns (three SuperAWM-H connected in series) manufactured by Tosoh Corporation under a flow of dimethylformamide (DMF) as a solvent at a flow rate of 0.3 ml/min.

(Melting point)

The melting point was determined as the temperature corresponding to the maximum value in the heat of fusion curve when the temperature was raised from 30°C to 220°C at a rate of 10°C/min, then lowered to 30°C at 10°C/min, and raised again to 220°C at a rate of 10°C/min by using a differential scanning calorimetry (DSC) apparatus.

In the examples and comparative examples, polymers having the following physical properties were used as binders.

Binder (D): PVdF (VdF homopolymer)

Weight average molecular amount 1,800,000
Melting point 171°C

Binder (E): Fluorine-containing copolymer containing VdF unit and TFE unit

VdF/TFE = 81/19 (mol%)

Weight average molecular amount 1,230,000
Melting point 128°C

CMC: Carboxymethyl cellulose
SBR: Styrene butadiene elastomer

In addition, in the examples and the comparative examples, the following negative electrode active materials were used.

SiO: Powder of graphite-covered film silicon oxide (powder in which the surface of silicon oxide was covered with graphite)
Si: Powder of silicon
Sn: Powder of tin
LTO: Lithium titanate

In addition, in the examples and the comparative examples, the following conductive aids were used.

AB: Acetylene black

Super P: Furnace black (trade name: Super-P (manufactured by IMERYS S.A.))
KB: Ketjen black

In addition, in the examples and the comparative examples, the following single-walled carbon nanotubes were used.
Single-walled carbon nanotube (trade name "TUBALL BATT SWCNT", manufactured by OCSiAl)

Average outer diameter: 1.6 ± 0.4 nm
Length: 5 μm or more
Average G/D ratio: 86.5 ± 7.1

(Preparation of negative electrode mixture)

Example 1

93% by mass of a negative electrode active material, 0.05% by mass of a single-walled carbon nanotube, 1.95% by mass of a conductive aid, and 5% by mass of a binder were mixed together, and an appropriate amount of N-methyl-2-pyrrolidone (NMP) was further added thereto to prepare a negative electrode mixture having a formulation shown in Table 1 and Table 2. For the preparation of the negative electrode mixture, a NMP dispersion of the single-walled carbon nanotube, an 8% by mass NMP solution of the binder (D), and a 5% by mass NMP solution of the binder (E) were used.

Examples 2 to 20 and Comparative Examples 2 to 5

Negative electrode mixtures were prepared in the same manner as in Example 1 except that the materials and amounts thereof used were changed so as to obtain a formulation shown in Table 1 and Table 2. The amounts of the single-walled carbon nanotube and the conductive aid were each adjusted so that the total content thereof reached 2% by mass.

Comparative Example 1

93% by mass of a negative electrode active material, 0.5% by mass of a single-walled carbon nanotube, 1.55% by mass of a conductive aid, and 5% by mass of a binder were mixed together, and an appropriate amount of water was further added thereto to prepare a negative electrode mixture having a formulation shown in Table 2. For the preparation of the negative electrode mixture, an aqueous dispersion of the single-walled carbon nanotube, a 48% by mass aqueous solution of SBR, and a 1.5% by mass aqueous solution of CMC were used.

(Creation of negative electrode including negative electrode material layer)

Each of the negative electrode mixtures obtained in the examples and the comparative examples was applied to one side or both sides of a negative electrode current collector made of a copper foil, and this was dried. This was cut off to a predetermined electrode size and rolled by using a roll press to create a negative electrode having a negative electrode material layer formed on one side or each of both sides of the negative electrode current collector, and the negative electrode was evaluated by the methods described below.

(Peel strength between negative electrode material layer and negative electrode current collector of negative electrode)

The negative electrode including the negative electrode material layer on one side was cut off to create a 1.2 cm × 7.0 cm test piece. The negative electrode material layer side of the test piece was fixed to a movable jig using a double-sided tape, then a tape was attached to the surface of a negative electrode current collector, and the stress (N/cm) when the tape was pulled at an angle of 90 degrees at a speed of 100 mm/min were measured using an autograph. 1 N was used for the load cell of the autograph.

(Maximum test force)

Bending strength (3-point bending test) was measured by a method according to ASTM D790. A negative electrode including a negative electrode material layer on each of both sides was cut into a size of 15 mm × 20 mm to prepare a test piece. According to the 3-point bending method, the test piece was disposed between a first point and a second point, which were 10 mm apart, and the center (third point) of the test piece was pushed at a constant speed in the

test piece thickness direction by using a probe to carry out a bending property test. The force applied while causing the probe to travel at a travel speed of 5 mm/min in the thickness direction at the third point was measured. The maximum bending force or maximum bending strength is the maximum value of the force applied to the test piece depending on the distance traveled by the probe.

(Preparation of electrolyte)

Ethylene carbonate, which is a high dielectric constant solvent, and ethylmethyl carbonate, which is a low viscosity solvent, were mixed such that the volume ratio therebetween was 30:70, $LiPF_6$ was added to the resulting mixture in such a way as to have a concentration of 1.0 mol/liter, and 2% by mass of vinylene carbonate was added to this mixture to obtain a non-aqueous electrolyte.

(Creation of positive electrode)

97 Parts by mass of $LiNi_{0.6}Mn_{0.2}Co_{0.2}O_2$ (NMC622) as a positive electrode active material, 1.5 parts by mass of acetylene black (AB) as a conductive aid, and 1.5 parts by mass of a polyvinylidene fluoride (8% by mass NMP solution) were added and mixed with a disperser to be slurried. The obtained slurry was applied to and dried on an aluminum foil having a thickness of 20 μm and rolled with a press. The slurry was cut out into a shape having a coated portion (positive electrode material layer) having a width of 50 mm and a length of 30 mm and an uncoated portion having a width of 5 mm and a length of 9 mm to create a positive electrode.

(Creation of lithium ion secondary battery)

Each of the negative electrodes including the negative electrode material layer on one side created in the examples and the comparative examples was cut out into a shape having a coated portion (negative electrode material layer) having a width of 52 mm and a length of 32 mm and an uncoated portion having a width of 5 mm and a length of 9 mm to create a negative electrode.

The positive electrode and the negative electrode were opposed to each other via a microporous polyethylene film (separator) having a thickness of 20 μm, the non-aqueous electrolyte obtained above was injected, the non-aqueous electrolyte was caused to sufficiently permeate into the separator and the like, and then the workpiece was sealed, precharged, and aged to create an aluminum laminate cell (lithium ion secondary battery).

(Measurement of battery characteristics)

For the obtained aluminum laminated cell, the cycle capacity retention rate at 45°C and the gas increase rate were investigated as follows.

(Cycle characteristics)

At 25°C, the obtained aluminum laminated cell was constant-current constant-voltage-charged (hereinafter, referred to as CC/CV charging) to 4.2 V at a current corresponding to 0.2 C (0.1 C cut), then, discharged to 3 V at a constant current of 0.2 C, this was regarded as 1 cycle, and 3 cycles were carried out. After that, at 45°C, the aluminum laminated cell was CC/CV-charged to 4.2 V at a current corresponding to 1.0 C (0.1 C cut), then, discharged to 3 V at a constant current of 1.0 C, this was regarded as 1 cycle, and the initial discharge capacity was determined from the discharge capacity. The cycle was carried out again, and the discharge capacity after 300 cycles was measured. The proportion of the discharge capacity after 300 cycles to the initial discharge capacity was determined, and this was defined as the capacity retention rate (%).

Capacity retention rate (%) = (discharge capacity after 300 cycles) ÷ (initial discharge capacity at 1.0 C) × 100

(Measurement of gas increase rate)

The volume of the battery for which the evaluation of the cycle characteristics had been ended was measured by Archimedes' principle, and the gas increase rate was determined from the volume change before and after charge and discharge.

Gas increase rate (%) = (volume (ml) after 300 cycles)/(initial volume (ml)) × 100

The above results are shown in Table 1 and Table 2.

[Table 1]

Table 1

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Negative electrode active material (1) | SiO | SiO | SiO | SiO | SiO | SiO | SiO | SiO | SiO | SiO | SiO | Si | Sn |
| Negative electrode active material (2) | Graphite | Graphite | Graphite | Graphite | Graphite | Graphite | Graphite | Graphite | Graphite | Graphite | Graphite | Graphite | Graphite |
| Mass ratio of negative electrode active material (2) to negative electrode active material (1) ((2)/(1)) | 80/20 | 80/20 | 80/20 | 80/20 | 80/20 | 95/5 | 60/40 | 40/60 | 0/100 | 80/20 | 80/20 | 80/20 | 80/20 |
| Content of single-walled carbon nanotube (% by mass) | 0.05 | 0.1 | 0.2 | 0.5 | 1 | 0.5 | 0.5 | 0.5 | 0.5 | 0.2 | 0.2 | 0.1 | 0.1 |
| Kind of conductive aid | AB | AB | AB | AB | AB | AB | AB | AB | AB | Super-P | KB | AB | AB |

(continued)

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Total content of single-walled carbon nanotube and conductive aid (% by mass) | 2 | 2 | 2 | 2 | 2 | 2 | 2 | 2 | 2 | 2 | 2 | 2 | 2 |
| Binder (1) | (D) | (D) | (D) | (D) | (D) | (D) | (D) | (D) | (D) | (D) | (D) | (D) | (D) |
| Binder (2) | (E) | (E) | (E) | (E) | (E) | (E) | (E) | (E) | (E) | (E) | (E) | (E) | (E) |
| Mass ratio of binder (1) to binder (2) ((1)/(2)) | 80/20 | 80/20 | 80/20 | 80/20 | 80/20 | 80/20 | 80/20 | 80/20 | 80/20 | 80/20 | 80/20 | 80/20 | 80/20 |
| Total content of binder (% by mass) | 5 | 5 | 5 | 5 | 5 | 5 | 5 | 5 | 5 | 5 | 5 | 5 | 5 |
| Peel strength (N/cm) | 100 | 118 | 136 | 155 | 182 | 136 | 173 | 182 | 209 | 145 | 127 | 127 | 127 |
| Bend maximum stress (N) | 107 | 113 | 127 | 153 | 167 | 140 | 167 | 180 | 193 | 120 | 127 | 120 | 127 |
| Capacity retention rate at 300th cycle at 45°C (%) | 135 | 138 | 140 | 145 | 147 | 152 | 142 | 138 | 133 | 142 | 143 | 130 | 135 |

(continued)

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Gas increase rate at 300th cycle at 45°C (%) | 94 | 93 | 92 | 90 | 90 | 89 | 92 | 94 | 94 | 92 | 93 | 95 | 94 |

[Table 2]

Table 2

| | Example 14 | Example 15 | Example 16 | Example 17 | Example 18 | Example 19 | Example 20 | Comparative Example 1 | Comparative Example 2 | Comparative Example 3 | Comparative Example 4 | Comparative Example 5 |
|---|---|---|---|---|---|---|---|---|---|---|---|---|
| Negative electrode active material (1) | LTO | SiO | SiO | SiO | SiO | SiO | SiO | SiO | SiO | SiO | SiO | SiO |
| Negative electrode active material (2) | Graphite | Graphite | Graphite | Graphite | Graphite | Graphite | Graphite | Graphite | Graphite | Graphite | Graphite | Graphite |
| Mass ratio of negative electrode active material (2) to negative electrode active material (1) ((2)/(1)) | 80/20 | 80/20 | 80/20 | 80/20 | 80/20 | 80/20 | 95/5 | 80/20 | 80/20 | 80/20 | 80/20 | 80/20 |
| Content of single-walled carbon nanotube (% by mass) | 0.1 | 1 | 1 | 1 | 1 | 1 | 0.5 | 0.5 | 0.5 | 0.5 | - | 0.5 |
| Kind of conductive aid | AB | AB | AB | AB | AB | - | - | AB | AB | AB | AB | AB |

(continued)

| | Example 14 | Example 15 | Example 16 | Example 17 | Example 18 | Example 19 | Example 20 | Comparative Example 1 | Comparative Example 2 | Comparative Example 3 | Comparative Example 4 | Comparative Example 5 |
|---|---|---|---|---|---|---|---|---|---|---|---|---|
| Total content of single-walled carbon nanotube and conductive aid (% by mass) | 2 | 2 | 2 | 2 | 2 | 1 | 0.5 | 2 | 2 | 2 | 2 | 2 |
| Binder (1) | (D) | (D) | (D) | (D) | (D) | (D) | (D) | CMC | Polyimide | Aramid | (D) | (D) |
| Binder (2) | (E) | (E) | (E) | (E) | (E) | (E) | (E) | SBR | - | - | (E) | - |
| Mass ratio of binder (1) to binder (2) ((1)/(2)) | 80/20 | 95/5 | 60/40 | 40/60 | 0/100 | 80/20 | 80/20 | 50/50 | - | - | 80/20 | - |
| Total content of binder (% by mass) | 5 | 5 | 5 | 5 | 5 | 5 | 5 | 5 | 5 | 5 | 5 | 5 |
| Peel strength (N/cm) | 136 | 200 | 173 | 164 | 164 | 191 | 145 | 100 | 155 | 145 | 82 | 127 |
| Bend maximum stress (N) | 127 | 180 | 153 | 133 | 120 | 160 | 133 | 100 | 553 | 527 | 127 | 333 |
| Capacity retention rate at 300th cycle at 45°C (%) | 143 | 148 | 140 | 138 | 135 | 127 | 132 | 100 | 122 | 118 | 47 | 103 |

(continued)

| | Example 14 | Example 15 | Example 16 | Example 17 | Example 18 | Example 19 | Example 20 | Comparative Example 1 | Comparative Example 2 | Comparative Example 3 | Comparative Example 4 | Comparative Example 5 |
|---|---|---|---|---|---|---|---|---|---|---|---|---|
| Gas increase rate at 300th cycle at 45°C (%) | 93 | 90 | 93 | 93 | 94 | 96 | 95 | 100 | 97 | 102 | 111 | 103 |

## Claims

1. A negative electrode mixture, comprising a single-walled carbon nanotube, a negative electrode active material, and a binder, wherein

   the negative electrode mixture comprises, as the negative electrode active material, a negative electrode active material that exhibits a potential of 2.5 V or less vs. Li when alloyed with Li or bonded with Li, and
   the binder contains a fluorine-containing copolymer containing vinylidene fluoride unit and a unit of an other monomer other than vinylidene fluoride.

2. The negative electrode mixture according to claim 1, wherein the negative electrode active material is a compound containing at least one element selected from the group consisting of Si, Sn, V, Nb, and Ti.

3. The negative electrode mixture according to claim 1, wherein the negative electrode active material is at least one selected from the group consisting of Si and $SiO_x$, wherein $0 < x < 2$.

4. The negative electrode mixture according to claim 1, wherein the negative electrode active material is a carbonaceous material.

5. The negative electrode mixture according to claim 1, wherein the negative electrode active material comprises a compound containing at least one element selected from the group consisting of Si, Sn, V, Nb, and Ti, and a carbonaceous material.

6. The negative electrode mixture according to any one of claims 1 to 5, wherein an average outer diameter of the single-walled carbon nanotube is 2.5 nm or less.

7. The negative electrode mixture according to any one of claims 1 to 6, wherein an average G/D ratio of the single-walled carbon nanotube is 2 or more.

8. The negative electrode mixture according to any one of claims 1 to 7, wherein a content of the single-walled carbon nanotube is 0.001 to 10% by mass, based on a solid content mass of the negative electrode mixture.

9. The negative electrode mixture according to any one of claims 1 to 8, wherein the other monomer is a fluorinated monomer, excluding vinylidene fluoride unit.

10. The negative electrode mixture according to any one of claims 1 to 8, wherein the other monomer is at least one selected from the group consisting of tetrafluoroethylene, chlorotrifluoroethylene, (meth)acrylic acid, 2,3,3,3-tetrafluoropropene, hexafluoropropylene, and a fluoroalkyl vinyl ether.

11. The negative electrode mixture according to any one of claims 1 to 10, wherein the binder further contains a polyvinylidene fluoride.

12. The negative electrode mixture according to claim 11, wherein a mass ratio of the polyvinylidene fluoride to the fluorine-containing copolymer, polyvinylidene fluoride/fluorine-containing copolymer, is 99/1 to 1/99.

13. The negative electrode mixture according to any one of claims 1 to 12, further comprising a solvent.

14. A negative electrode comprising a current collector and a negative electrode material layer provided on one side or each of both sides of the current collector and formed from the negative electrode mixture according to any one of claims 1 to 13.

15. A secondary battery comprising the negative electrode according to claim 14.

**INTERNATIONAL SEARCH REPORT**

International application No. **PCT/JP2023/000174**

**A. CLASSIFICATION OF SUBJECT MATTER**

***H01M 4/13***(2010.01)i; ***H01G 11/30***(2013.01)i; ***H01G 11/36***(2013.01)i; ***H01G 11/38***(2013.01)i; ***H01M 4/139***(2010.01)i; ***H01M 4/38***(2006.01)i; ***H01M 4/48***(2010.01)i; ***H01M 4/587***(2010.01)i; ***H01M 4/62***(2006.01)i
FI: H01M4/13; H01G11/30; H01G11/36; H01G11/38; H01M4/139; H01M4/38 Z; H01M4/48; H01M4/587; H01M4/62 Z

According to International Patent Classification (IPC) or to both national classification and IPC

**B. FIELDS SEARCHED**

Minimum documentation searched (classification system followed by classification symbols)

H01M4/13; H01G11/30; H01G11/36; H01G11/38; H01M4/139; H01M4/38; H01M4/48; H01M4/587; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-10681 A (EQUOS RESEARCH CO LTD) 17 January 2008 (2008-01-17) | 1-15 |
| A | JP 2018-534747 A (LG CHEM, LTD.) 22 November 2018 (2018-11-22) | 1-15 |
| A | JP 2017-84759 A (OSAKA GAS CO LTD) 18 May 2017 (2017-05-18) | 1-15 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2023** | **20 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/000174**

| Patent document cited in search report | Publication date (day/month/year) | Patent family member(s) | Publication date (day/month/year) |
|---|---|---|---|
| JP 2008-10681 A | 17 January 2008 | (Family: none) | |
| JP 2018-534747 A | 22 November 2018 | US 2018/0198129 A1<br>WO 2017/074124 A1<br>EP 3301745 A1<br>KR 10-2017-0049459 A<br>CN 107851801 A | |
| JP 2017-84759 A | 18 May 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018146865 A